(19) Europäisches Patentamt
European Patent Office
Office européen des brevets

(11) **EP 2 463 988 A2**

(12) **EUROPEAN PATENT APPLICATION**

(43) Date of publication:
**13.06.2012 Bulletin 2012/24**

(51) Int Cl.:
***H02K 1/27*** (2006.01)

(21) Application number: **11189243.6**

(22) Date of filing: **15.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.12.2010 JP 2010272536**

(71) Applicant: **Kabushiki Kaisha Yaskawa Denki Kitakyushu-shi, Fukuoka 806-0004 (JP)**

(72) Inventor: **Murakami, Sohji Kitakyushu-Shi, Fukuoka 806-0004 (JP)**

(74) Representative: **Gendron, Vincent Christian et al S.A. Fedit-Loriot 38, avenue Hoche 75008 Paris (FR)**

(54) **Electric motor**

(57) An electric motor 100 according to the embodiment includes a rotor core 21, a stator core 11 provided so as to face the rotor core 21 in the radial direction, and permanent magnets 23 buried in the vicinity of an outer circumferential part of the rotor core 21, wherein the outer circumferential part of the rotor core 21 and an inner circumferential part of the stator core 11 are formed in such a manner that a radial gap length between the outer circumferential part of the rotor core 21 and the inner circumferential part of the stator core 11 for one magnetic pole of the permanent magnet 23 becomes a gap length along a gap length l regulated by an expression (1) capable of making magnetic flux density distribution between the outer circumferential part of the rotor core 21 and the inner circumferential part of the stator core 11 a sinusoidal waveform.

FIG.4

**EP 2 463 988 A2**

**Description**

BACKGROUND OF THE INVENTION

FIELD OF THE INVENTION

The present invention disclosed herein relates to an electric motor.

DISCUSSION OF THE BACKGROUND

Conventionally, there is a known electric motor in which a permanent magnet is buried in the vicinity of an outer circumferential part of a rotor core (for example, refer to Unexamined Japanese Patent Publication No. 2000-197292).
The above publication discloses a permanent magnet type rotor of a permanent magnet type electric motor in which the permanent magnet is buried in the vicinity of the outer circumferential part of the rotor iron core (rotor core) . In this permanent magnet type electric motor, a stator iron core (stator core) is provided so as to face the rotor iron core in the radial direction. In this permanent magnet type electric motor, by forming a part of the outer circumferential part of the rotor iron core, the part corresponding to one electric pole of the permanent magnet by one arc, magnetic flux density distribution between the outer circumferential part of the rotor iron core and an inner circumferential part of the stator iron core is made distribution close to a sinusoidal waveform. Thereby, a waveform of inductive voltage can be brought close to a sinusoidal waveform, and cogging torque and pulsation of torque can be reduced, so that a performance of the electric motor can be improved.
However, in the permanent magnet type electric motor described in the above publication, since the part of the outer circumferential part of the rotor iron core corresponding to one magnetic pole of the permanent magnet is formed by one arc, it is thought to be difficult to bring the magnetic flux density distribution between the outer circumferential part of the rotor iron core and the inner circumferential part of the stator iron core closer to a sinusoidal waveform. Therefore, in Patent Literature 1 described above, it is thought to be difficult to bring a waveform of inductive voltage closer to a sinusoidal waveform, and to reduce cogging torque and pulsation of torque more. Thus, there is a problem that it is difficult to improve a performance of the electric motor more.
This invention is achieved in order to solve the problem as described above, and one object of this invention is to provide an electric motor capable of improving a performance of the electric motor more by bringing magnetic flux density distribution between a rotor core and a stator core closer to a sinusoidal waveform.

SUMMARY OF THE INVENTION

In one aspect of the present invention, an electric motor includes a rotor core, a stator core provided so as to face the rotor core in the radial direction, and a permanent magnet buried in the vicinity of an outer circumferential part of the rotor core, wherein the outer circumferential part of the rotor core and an inner circumferential part of the stator core are formed in such a manner that a radial gap length between the outer circumferential part of the rotor core and the inner circumferential part of the stator core for one magnetic pole of the permanent magnet becomes a gap length along a gap length 1 regulated by the following expression (1) capable of making magnetic flux density distribution between the outer circumferential part of the rotor core and the inner circumferential part of the stator core a sinusoidal waveform.

[Expression 1]

$$l = l(x) = \frac{2l_{\max}l_{\min}}{(l_{\max} - l_{\min})\cos\left(\dfrac{2\pi}{\tau}x\right) + (l_{\max} + l_{\min})} \qquad \square\square\square \qquad (1)$$

In the expression (1), the reference sign x denotes a distance of a part of a circumference of a circle around a center of the rotor core passing between the outer circumferential part of the rotor core and the inner circumferential part of the stator core, the distance being measured from a center of the part corresponding to one magnetic pole of the permanent magnet along the circumference of the circle, the reference sign $1_{max}$ denotes a maximum value of the gap length 1, the reference sign $1_{min}$ denotes a minimum value of the gap length 1, and the reference sign τ denotes a length of the part of the circumference of the circle around the center of the rotor core passing between the outer circumferential part of the rotor core and the inner circumferential part of the stator core, the part corresponding to one magnetic pole of the permanent magnet.

With this electric motor according to one aspect, as described above, the outer circumferential part of the rotor core and the inner circumferential part of the stator core are formed in such a manner that the radial gap length between the outer circumferential part of the rotor core and the inner circumferential part of the stator core for one magnetic pole of the permanent magnet becomes the gap length along the gap length 1 regulated by the above expression (1) capable of making the magnetic flux density distribution between the outer circumferential part of the rotor core and the inner circumferential part of the stator core a sinusoidal waveform. Thereby, the magnetic flux density distribution between the outer circumferential part of the rotor core and the inner circumferential part of the stator core can be brought closer to a sinusoidal waveform based on the above expression (1) capable of making the magnetic flux density distribution between the outer circumferential part of the rotor core and the inner circumferential part of the stator core a sinusoidal waveform. As a result, the waveform of the inductive voltage can be brought closer to a sinusoidal waveform, and cogging torque and pulsation of torque can be more reduced, so that a performance of the electric motor can be more improved.

BRIEF DESCRIPTION OF THE DRAWINGS

Fig. 1 is a sectional view of an electric motor according to an embodiment;
Fig. 2 is a plan view showing a stator and a rotor of the electric motor according to the embodiment;
Fig. 3 is a plan view showing the rotor of the electric motor according to the embodiment;
Fig. 4 is a view showing a portion ranging from a center part to one end of a part of the stator and the rotor of the electric motor according to the embodiment, the part corresponding to one magnetic pole of a permanent magnet;
Fig. 5 is a view showing an outer shape of a rotor core of the electric motor according to the embodiment;
Fig. 6 is a view for illustrating a developing process for an expression capable of making magnetic flux density distribution between an outer circumferential part of the rotor core of the electric motor according to the embodiment and an inner circumferential part of a stator core a sinusoidal waveform;
Fig. 7 is a graph showing a waveform of inductive voltage of the electric motor according to the embodiment;
Fig. 8 is a plan view showing a rotor according to a first modified embodiment of the embodiment;
Fig. 9 is a view showing a portion ranging from a center part to one end of a part of a stator and the rotor according to the first modified embodiment of the embodiment, the part corresponding to one magnetic pole of the permanent magnet;
Fig. 10 is a plan view showing a stator and a rotor according to a second modified embodiment of the embodiment;
Fig. 11 is a view showing a part between adjacent slots of the stator and the rotor according to the second modified embodiment of the embodiment; and
Fig. 12 is a plan view showing a rotor according to a third modified embodiment of the embodiment.

DESCRIPTION OF THE EMBODIMENTS

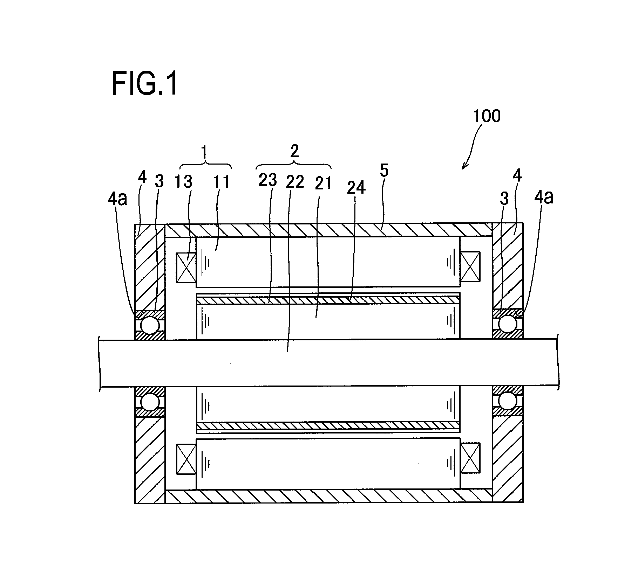

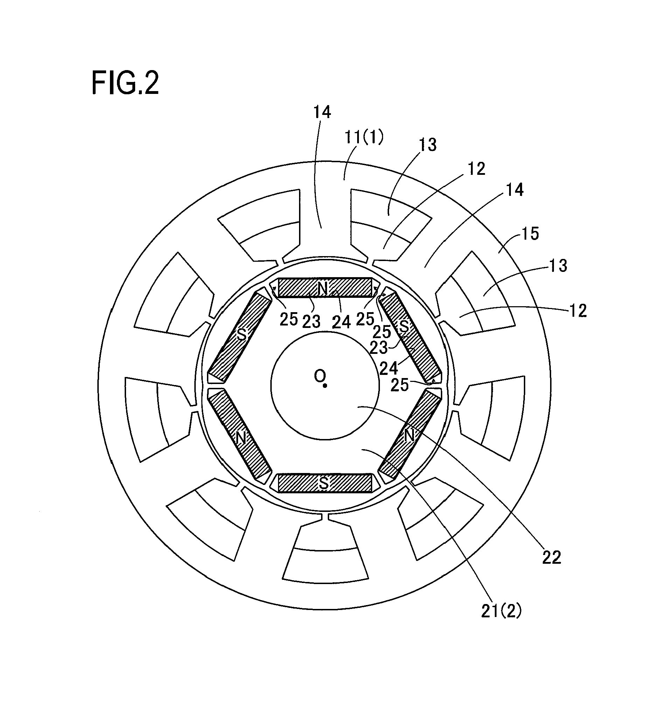

Hereinafter, an embodiment of the present invention will be described with reference to the drawings.
Firstly, with reference to Fig. 1, a configuration of an electric motor 100 will be described.
As shown in Fig. 1, the electric motor 100 is provided with a stator 1, a rotor 2, bearings 3, brackets 4, and a frame 5.
The stator 1 and the rotor 2 are arranged inside the frame 5. The stator 1 and the rotor 2 are arranged so as to face each other in the radial direction of the rotor 2. The brackets 4 are respectively attached to both ends of the frame 5. The bearings 3 formed by ball bearings or the like are respectively attached to the brackets 4. It should be noted that a shaft 22 described later is provided in the rotor 2 so as to pass through the rotor 2. This shaft 22 is rotatably supported on a pair of shaft holes 4a provided in the brackets 4 respectively through the bearings 3.
As shown in Fig. 2, the stator 1 is formed by a stator core 11 in which nine slots 12 are formed, and wirings 13. These nine slots 12 are formed inside the stator core 11. The slots 12 are arranged at equal intervals along the rotation direction of a rotor core 21. The stator core 11 is provided so as to have a predetermined space (gap) to face the rotor core 21 of the rotor 2 described later in the radial direction. The stator core 11 is formed by laminating magnetic steel sheets for example. The wirings 13 are wound between the slots 12 by concentrated winding or distributed winding. It should be noted that a part of the stator core 11 between the two adjacent slots 12 forms a tooth portion 14. An outer circumferential part of the stator core 11 forms a yoke portion 15.

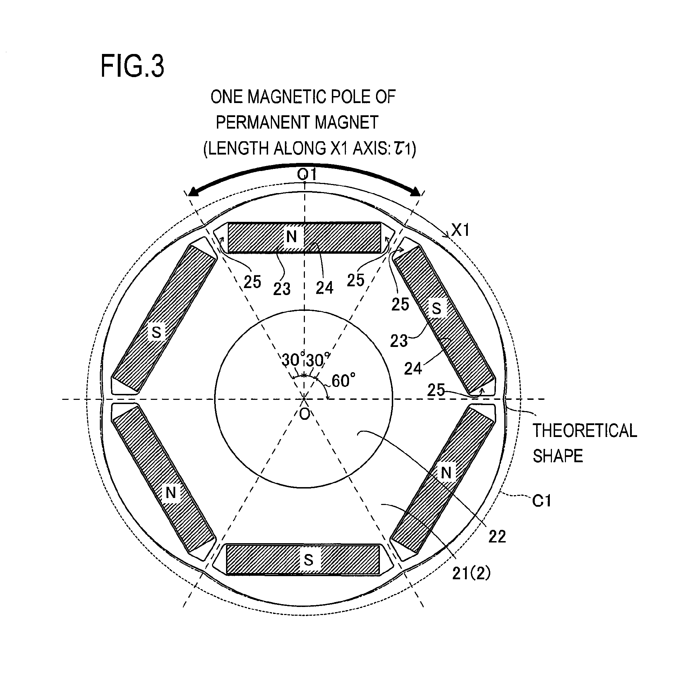

As shown in Figs. 2 and 3, the rotor 2 is formed by the rotor core 21, the shaft 22, and six permanent magnets 23. The rotor core 21 is formed by laminating magnetic steel sheets for example. The shaft 22 is provided so as to pass through a center of the rotor core 21. The six permanent magnets 23 are buried in the vicinity of an outer circumferential part of the rotor core 21. Specifically, the six permanent magnets 23 are respectively buried (fitted) in six hole portions 24 formed in the vicinity of the outer circumferential part of the rotor core 21. It should be noted that these six permanent magnets 23 are arranged in such a manner that magnetic poles on the outer circumferential side (N pole, S pole) are alternately opposite one by one along the rotation direction. The permanent magnets 23 are arranged at equal intervals along the rotation direction of the rotor core 21. Magnetic flux generated from the permanent magnets 23 flow in the substantially radial direction in the space (gap) between the stator core 11 and the rotor core 21. Clearances 25 are provided in both ends of the permanent magnets 23 fitted in the hole portions 24 along the rotation direction of the rotor core 21.

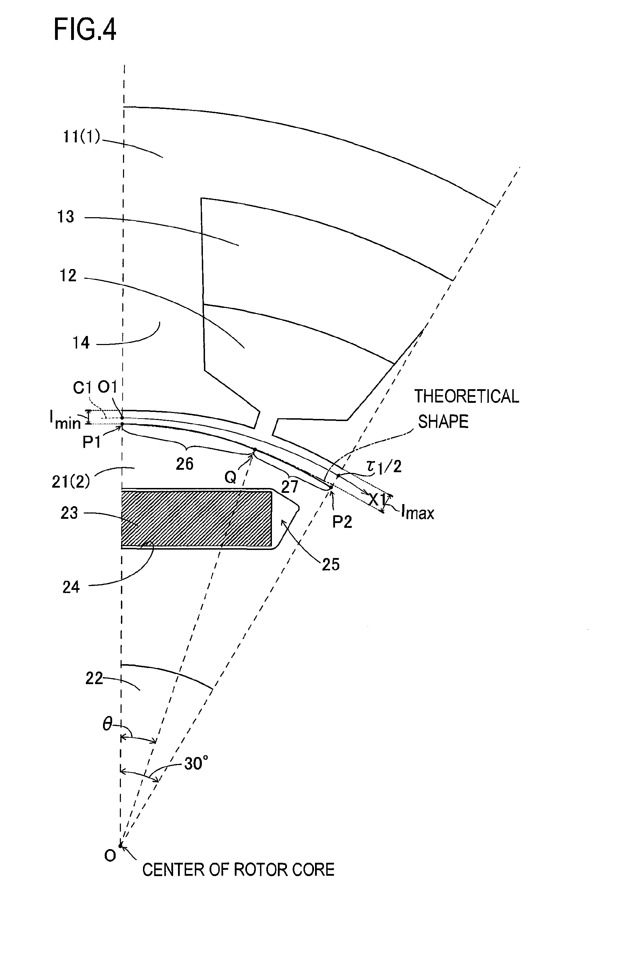

In the present embodiment, as shown in Figs. 3 to 5, the outer circumferential part of the rotor core 21 is formed in such a manner that a radial gap length between the outer circumferential part of the rotor core 21 and an inner circumferential part of the stator core 11 for one magnetic pole of the permanent magnet 23 (length of the space (gap) between the rotor core 21 and the stator core 11) becomes a gap length along a gap length 1 regulated by the following expression (2) capable of making magnetic flux density distribution between the outer circumferential part of the rotor core 21 and the inner circumferential part of the stator core 11 a sinusoidal waveform. It should be noted that a shape shown by an alternate long and short dash line in Figs. 3 and 4 indicates a shape of the outer circumferential part of the rotor core 21 in a case where the outer circumferential part of the rotor core 21 is formed in such a manner that the gap length between the rotor core 21 and the stator core 11 substantially matches with the gap length 1 regulated by the following expression (2) over the entire one magnetic pole of the permanent magnet 23 (theoretical shape) .

[Expression 2]

$$l = l(x) = \frac{2 l_{\max} l_{\min}}{(l_{\max} - l_{\min}) \cos\left(\dfrac{2\pi}{\tau_1} x\right) + (l_{\max} + l_{\min})} \qquad \Box\Box\Box \qquad (2)$$

It should be noted that in the above expression (2), the reference sign x denotes a distance of a part of a circumference of a circle C1 (see Figs. 3 and 4) around a center of the rotor core 21 passing between the outer circumferential part of the rotor core 21 and the inner circumferential part of the stator core 11, the distance being measured from a center of the part corresponding to one magnetic pole of the permanent magnet 23 along the circumference of the circle C1 (distance measured from a point O1 along an X1 axis in Figs. 3 and 4). The reference sign $1_{\max}$ denotes a maximum value of the gap length 1 (see Fig. 4), and the reference sign $1_{\min}$ denotes a minimum value of the gap length 1 (see Fig. 4). The reference sign $\tau_1$ denotes a length of the part of the circumference of the circle C1 corresponding to one magnetic pole of the permanent magnet 23 (see Fig. 3). A developing process for the above expression (2) will be described later.

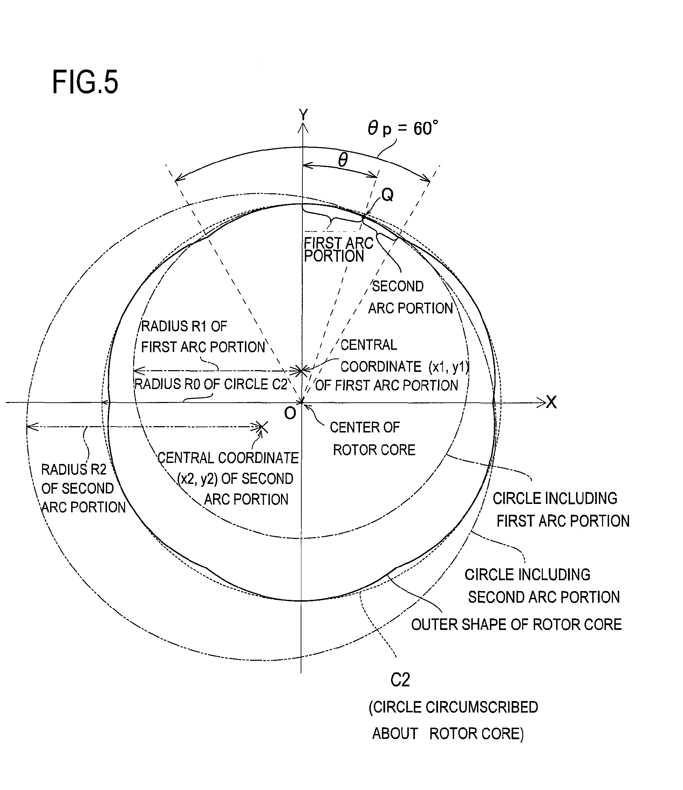

In the present embodiment, as shown in Fig. 4, a portion ranging from a center part to one end of a part of the outer circumferential part of the rotor core 21, the part corresponding to one magnetic pole of the permanent magnet 23 is formed by two arc portions 26 and 27 (a first arc portion and a second arc portion (see Fig. 5)) continuing to each other in such a manner that the gap length between the rotor core 21 and the stator core 11 becomes the gap length along the gap length 1 regulated by the above expression (2). It should be noted that in the present embodiment, the inner circumferential part of the stator core 11 is formed into a substantially perfect circle around the center 0 of the rotor core 21 (see Fig. 2).

As shown in Fig. 4, the arc portion 26 has a part (point P1) at which the gap length between the rotor core 21 and the stator core 11 is minimum, and is formed in such a manner that the gap length becomes a gap length substantially matching with the gap length 1 regulated by the above expression (2). The arc portion 27 has a part (point P2) at which the gap length between the rotor core 21 and the stator core 11 is maximum, and is formed in such a manner that the gap length becomes the gap length substantially matching with the gap length 1 regulated by the above expression (2).

It should be noted that in the present embodiment, a center of the arc portion 26 and a center of the arc portion 27 are respectively set at positions displaced from the center O of the rotor core 21. Specifically, as shown in Fig. 5, a central coordinate (x1, y1) of the arc portion 26 in an XY orthogonal coordinate system taking the center O of the rotor core 21 as an origin is set within a range regulated by -0.1 R0 ≤ x1 ≤ 0.1 R0 and 0 ≤ y1 ≤ 0.7 R0. A central coordinate (x2, y2) of the arc portion 27 is set within a range regulated by -0.6 R0 ≤ x2 ≤ 0 and -0.6 R0 ≤ y2 ≤ 0.5 R0. Thereby, the gap length between the rotor core 21 and the stator core 11 can be made the gap length along the gap length 1 regulated by the above expression (2) with using the arc portion 26 and the arc portion 27. It should be noted that the reference sign R0 denotes a radius of a circle C2 around the center of the rotor core 21 circumscribed about the rotor core 21. A radius R1 of the arc portion 26 is set to be smaller than the radius R0 of the circle C2.

In the present embodiment, in the XY orthogonal coordinate system taking the center 0 of the rotor core 21 as the origin (see Fig. 5) , an angle θ made by a Y axis and a straight line connecting the origin O and a point Q where the arc portion 26 and the arc portion 27 are connected is set within a range regulated by 0.45 θp ≤ θ ≤ 0.55 θp. It should be noted that the reference sign θp denotes a center angle (60 degrees) of a part of the above circle C2 corresponding to one magnetic pole of the permanent magnet 23.

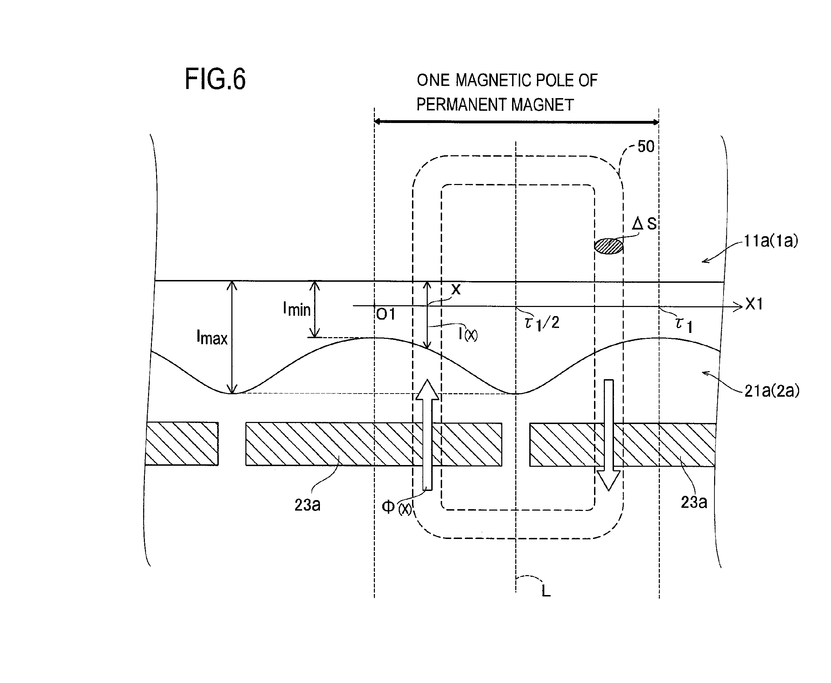

Next, with reference to Fig. 6, the developing process for the above expression (2) regulating the gap length 1 capable of making the magnetic flux density distribution between the outer circumferential part of the rotor core 21 and the inner circumferential part of the stator core 11 a sinusoidal waveform will be described.

Fig. 6 is an imagery view in which a stator core 11a and a rotor core 21a having the same configurations as the stator core 11 and the rotor core 21 according to the present embodiment are developed in a straight line. An X1 axis shown in Fig. 6 corresponds to the X1 axis shown in Figs. 3 and 4. In Fig. 6, slots provided in the stator core 11a, hole portions in which permanent magnets 23a of the rotor core 21a are fitted, and the like are omitted.

Firstly, in Fig. 6, magnetic flux ϕ generated from the permanent magnets 23a, the flux flowing through a predetermined position (position x) of a space (gap) between the rotor core 21a and the stator core 11a is indicated as a function ϕ(x) of the position x. Similarly, magnetic resistance R and the gap length 1 at the predetermined position (position x) of the space (gap) between the rotor core 21a and the stator core 11a are respectively indicated as functions R(x) and 1(x) of the position x.

Next, a magnetic circuit 50 to cope with the magnetic flux ϕ(x) generated from an N pole to an S pole between the two adjacent permanent magnets 23a will be supposed. A center in the X1 axis direction of one of the two adjacent permanent magnets 23a is an origin O1 of the X1 axis, and a center in the X1 axis direction of the other is x = $\tau_1$. In this case, the magnetic circuit 50 is line symmetrical with respect to a straight line L extending in the direction orthogonal to the X1 axis at a position of x = $\tau_1$ / 2 in a plan view.

The magnetic flux ϕ(x) passing inside the magnetic circuit 50 supposed as above, and the magnetic resistance R(x) of the magnetic circuit 50 are respectively expressed by the following expressions (3) and (4). Magnetic resistance in a part other than the gap will be ignored.

[Expression 3]

$$\phi(x) = \frac{F}{R(x)} \quad \square\square\square \quad (3)$$

$$R(x) = \rho \frac{l(x)}{\varDelta S} \quad \square\square\square \quad (4)$$

It should be noted that in the above expressions, the reference sign F denotes magnetomotive force of the permanent magnets 23a, the reference sign ρ denotes a magnetic resistance rate of the space (gap) between the rotor core 21a and the stator core 11a, and the reference sign ΔS denotes a cross sectional area of the magnetic circuit 50.

Thereby, magnetic flux density B (= ϕ / ΔS) at the predetermined position (position x) of the space (gap) between the rotor core 21a and the stator core 11a is expressed by the following expression (5) based on the above expressions (3) and (4) .

[Expression 4]

$$B = B(x) = \frac{\phi(x)}{\varDelta S} = \frac{F}{\rho}\frac{1}{l(x)} \qquad \square\square \qquad (5)$$

In order to make distribution of the magnetic flux density B(x) at the predetermined position (position x) of the space (gap) between the rotor core 21a and the stator core 11a a sinusoidal waveform, there is a need for establishing the following expression (6).

[Expression 5]

$$\frac{1}{l(x)} = A\cos\left(\frac{2\pi}{\tau_1}x\right) + B \qquad \square\square \qquad (6)$$

It should be noted that in the above expression (6), the reference signs A and B denote predetermined constants.

The predetermined constants A and B are determined based on a condition that "1 = $1_{min}$ (minimum value of the gap length 1)" with "x = 0", and on a condition that "1 = $l_{max}$ (maximum value of the gap length 1)" with "x = $\tau_1$ /2". When the above expression (6) is rewritten based on the constants A and B determined in such a way, the above expression (2) is obtained.

In such a way, the above expression (2) regulating the gap length 1 in a case where the magnetic flux density distribution between the outer circumferential part of the rotor core 21 and the inner circumferential part of the stator core 11 becomes a sinusoidal waveform is developed.

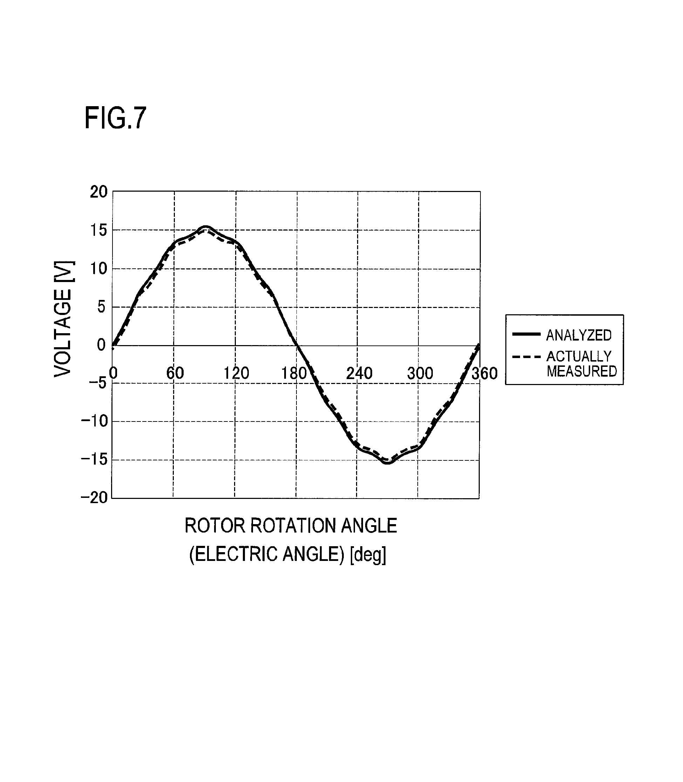

Next, with reference to Fig. 7, a waveform of the inductive voltage of the electric motor 100 according to the present embodiment will be described.

A graph with a dotted line in Fig. 7 is a graph showing a result of manufacturing an electric motor corresponding to the present embodiment (electric motor in which an outer circumferential part of a rotor core is formed by two arc portions, and an inner circumferential part of a stator core is formed into a substantially perfect circle, so that a gap length between the rotor core and the stator core is the gap length along the gap length I regulated by the above expression (2)), rotating the rotor at predetermined rotation speed, and actually measuring to determine a change in the inductive voltage relative to a rotation angle thereof (electric angle = actual rotation angle / number of magnetic pole).

Meanwhile, a graph with a solid line in Fig. 7 is a graph showing a result of supposing that the electric motor 100 according to the present embodiment is rotated at predetermined rotation speed, and simulating (analyzing) to determine a change in the inductive voltage relative to a rotation angle thereof (electric angle).

As shown in Fig. 7, the graph of the solid line and the graph of the dotted line are substantially overlapped with each other. It is found that both the graph of the solid line and the graph of the dotted line have a sinusoidal waveform. Thereby, it is confirmed by both the experiment and the simulation that the waveform of the inductive voltage of the electric motor in which the outer circumferential part of the rotor core is formed by the two arc portions, and the inner circumferential part of the stator core is formed into a substantially perfect circle, so that the gap length between the rotor core and the stator core is the gap length along the gap length I regulated by the above expression (2) becomes a sinusoidal waveform.

In the present embodiment, as described above, the outer circumferential part of the rotor core 21 is formed in such a manner that the radial gap length between the outer circumferential part of the rotor core 21 and the inner circumferential part of the stator core 11 for one magnetic pole of the permanent magnet 23 becomes the gap length along the gap length 1 regulated by the above expression (2) capable of making the magnetic flux density distribution between the outer circumferential part of the rotor core 21 and the inner circumferential part of the stator core 11 a sinusoidal waveform. Thereby, the magnetic flux density distribution between the outer circumferential part of the rotor core 21 and the inner circumferential part of the stator core 11 can be brought closer to a sinusoidal waveform based on the above expression (2) capable of making the magnetic flux density distribution between the outer circumferential part of the rotor core 21 and the inner circumferential part of the stator core 11 a sinusoidal waveform. As a result, the waveform of the inductive voltage can be brought closer to a sinusoidal waveform, and cogging torque and pulsation of torque can be more reduced, so that a servo performance of the electric motor 100 can be more improved.

In the present embodiment, as described above, the portion ranging from the center part to one end of the part of the outer circumferential part of the rotor core 21 corresponding to one magnetic pole of the permanent magnet 23 is formed by the two arc portions (the arc portion 26 and the arc portion 27) continuing to each other, and the inner circumferential part of the stator core 11 is formed into a substantially perfect circle around the center 0 of the rotor core 21 in such a manner that the radial gap length between the outer circumferential part of the rotor core 21 and the inner circumferential part of the stator core 11 becomes the gap length along the gap length 1 regulated by the above expression (2) . Thereby, by the two arc portions (the arc portion 26 and the arc portion 27) continuing to each other and the inner peripheral part of the stator core 11 formed into a substantially perfect circle, the radial gap length between the outer circumferential part of the rotor core 21 and the inner circumferential part of the stator core 11 can be easily made the gap length along the gap length 1 regulated by the above expression (2).

1 In the present embodiment, as described above, the arc portion 26 has the part (point P1) at which the radial gap length between the outer circumferential part of the rotor core 21 and the inner circumferential part of the stator core 11 is minimum, and is formed in such a manner that the radial gap length between the arc portion 26 and the inner circumferential part of the stator core 11 becomes the gap length substantially matching with the gap length 1 regulated by the above expression (2). The arc portion 27 has the part (point P2) at which the radial gap length between the outer circumferential part of the rotor core 21 and the inner circumferential part of the stator core 11 is maximum, and is formed in such a manner that the radial gap length between the arc portion 27 and the inner circumferential part of the stator core 11 becomes the gap length substantially matching with the gap length 1 regulated by the above expression (2) . The magnetic flux flowing in the space (gap) between the rotor core 21 and the stator core 11 does not easily flow in the radial direction as the gap length thereof is increased. Thus, the magnetic flux density in a part with the large gap length between the rotor core 21 and the stator core 11 is smaller than the magnetic flux in the center part of the part of the outer circumferential part of the rotor core 21 corresponding to one magnetic pole of the permanent magnet 23. Therefore, an influence of a shape of the rotor core 21 in the part with the large gap length between the rotor core 21 and the stator core 11 on a performance of the electric motor 100 such as the cogging torque and the pulsation of the torque is smaller than an influence of a shape of the rotor core 21 in the center part of the part of the outer circumferential part of the rotor core 21 corresponding to one magnetic pole of the permanent magnet 23 and a part in the vicinity of the part on the performance of the electric motor 100. Thus, as in the present embodiment, by forming the outer circumferential part of the rotor core 21 by the arc portion 26 and the arc portion 27, so that the gap length other than the vicinity of the part in which the gap length between the rotor core 21 and the stator core 11 is maximum is made the gap length along the gap length l regulated by the above expression (2), the magnetic flux density distribution between the outer circumferential part of the rotor core 21 and the inner circumferential part of the stator core 11 can be brought close to a sinusoidal waveform.

1 In the present embodiment, as described above, the center of the arc portion 26 and the center of the arc portion 27 are respectively set at the positions displaced from the center 0 of the rotor core 21. Thereby, by the arc portion 26 and the arc portion 27, the radial gap length between the outer circumferential part of the rotor core 21 and the inner circumferential part of the stator core 11 can be easily made the gap length along the gap length 1 regulated by the above expression (2).

In the present embodiment, as described above, the radius R1 of the arc portion 26 is set to be smaller than the radius R0 of the circle C2 circumscribed about the rotor core 21. Preferably, a radius R2 of the arc portion 27 is set to be larger than the radius R0 of the circle C2 circumscribed about the rotor core 21. Thereby, by the arc portion 26 and the arc portion 27 having different radiuses, the radial gap length between the outer circumferential part of the rotor core 21 and the inner circumferential part of the stator core 11 can be easily made the gap length along the gap length 1 regulated by the above expression (2).

In the present embodiment, as described above, the central coordinate (x1, y1) of the arc portion 26 (first arc portion) in the XY orthogonal coordinate system taking the center 0 of the rotor core 21 as the origin is set within the range regulated by -0.1 R0 ≤ x1 ≤ 0.1 R0 and 0 ≤ y1 ≤ 0.7 R0. The central coordinate (x2, y2) of the arc portion 27 (second arc portion) is set within the range regulated by -0.6 R0 ≤ x2 ≤ 0 and -0.6 R0 ≤ y2 ≤ 0.5 R0. In the XY orthogonal coordinate system taking the center 0 of the rotor core 21 as the origin, the angle θ made by the Y axis and the straight line connecting the origin O and the point where the arc portion 26 and the arc portion 27 are connected is set within the range regulated by 0.45 θp ≤ θ ≤ 0.55 θp. Thereby, the radial gap length between the outer circumferential part of the rotor core 21 and the inner circumferential part of the stator core 11 can be made the gap length along the gap length 1 regulated by the above expression (2) .

It should be noted that the embodiment disclosed herein is considered to be not limitation but an example in all respects. The scope of the present invention is indicated not by the above description of the embodiment but by the claims, and includes all modifications with equal meanings to the claims within a range of the claims.

For example, although the above embodiment shows the example that by forming the part of the outer circumferential part of the rotor core corresponding to one magnetic pole of the permanent magnet by the two arc portions continuing to each other, the gap length between the rotor core and the stator core is made the gap length along the gap length 1 regulated by the above expression (2), the present invention is not limited to this. As long as the gap length between the rotor core and the stator core becomes the gap length along the gap length 1 regulated by the above expression (2), the part of the outer circumferential part of the rotor core corresponding to one magnetic pole of the permanent magnet may be formed by three or more arc portions or may be formed by curved portions or straight line portions having other shapes than an arc shape.

By forming the outer circumferential part of the rotor core into a theoretical shape as shown by the dashed and dotted line in Figs. 3 and 4, the gap length between the rotor core and the stator core may be made the gap length substantially matching with the gap length 1 regulated by the above expression (2) over the entire one magnetic pole of the permanent magnet. In such a way, the magnetic flux density distribution between the outer circumferential part of the rotor core and the inner circumferential part of the stator core can be brought further close to a sinusoidal waveform.

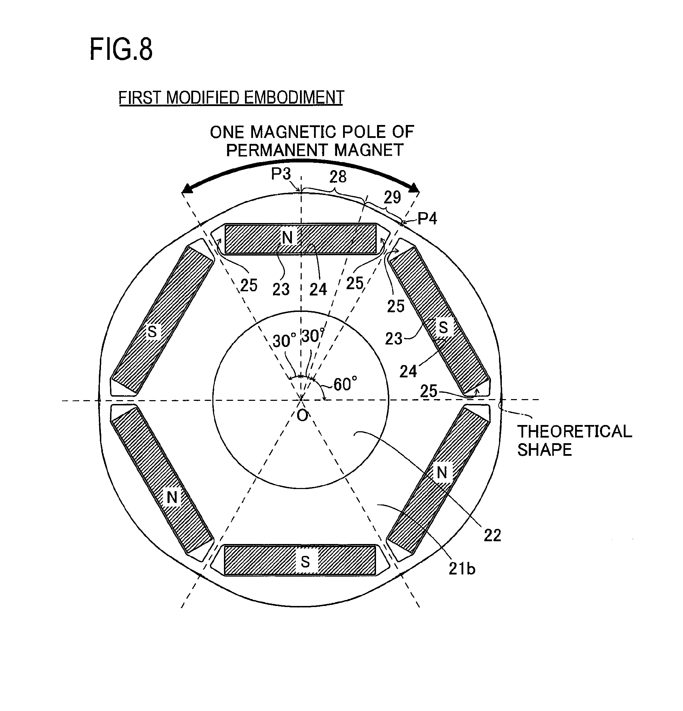

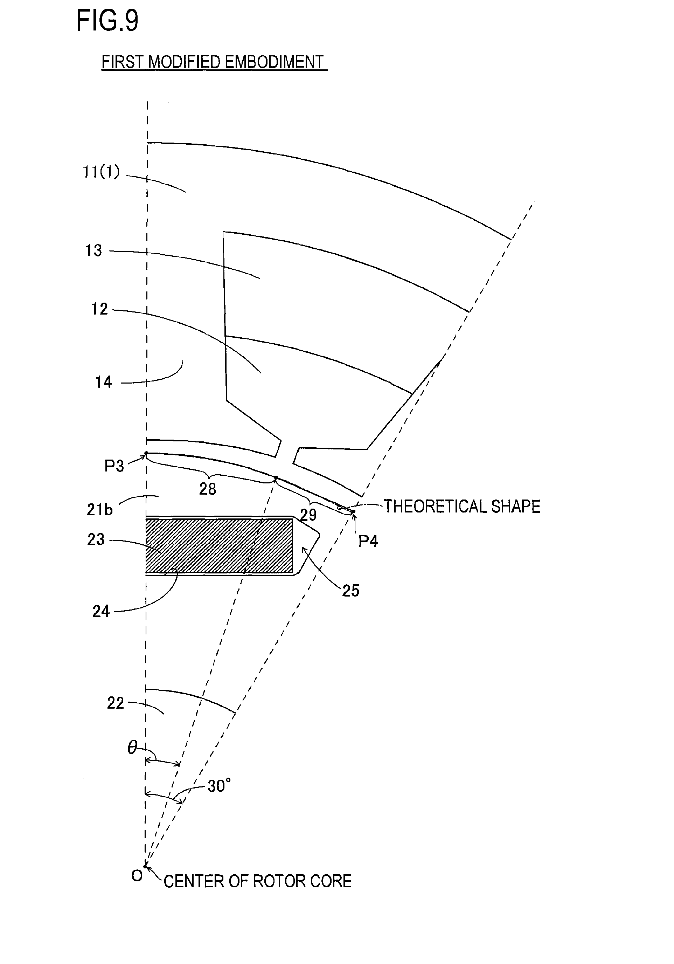

As in a first modified embodiment shown in Figs. 8 and 9, a part of an outer circumferential part of a rotor core 21b corresponding to one magnetic pole of the permanent magnet 23 may be formed by one arc portion 28 and one straight line portion 29 continuing to each other. In this first modified embodiment, the arc portion 28 has a part (point P3) at which a radial gap length between the outer circumferential part of the rotor core 21b and the inner circumferential part of the stator core 11 is minimum, and is formed in such a manner that the gap length becomes the gap length substantially matching with the gap length 1 regulated by the above expression (2). The straight line portion 29 has a part (point P4) at which the radial gap length between the outer circumferential part of the rotor core 21b and the inner circumferential part of the stator core 11 is maximum, and is formed in such a manner that the gap length becomes the gap length substantially matching with the gap length 1 regulated by the above expression (2).

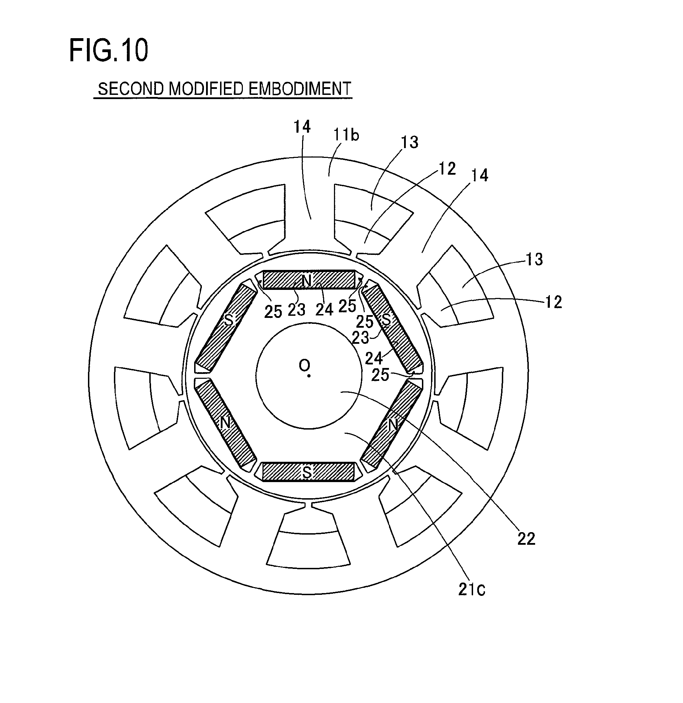

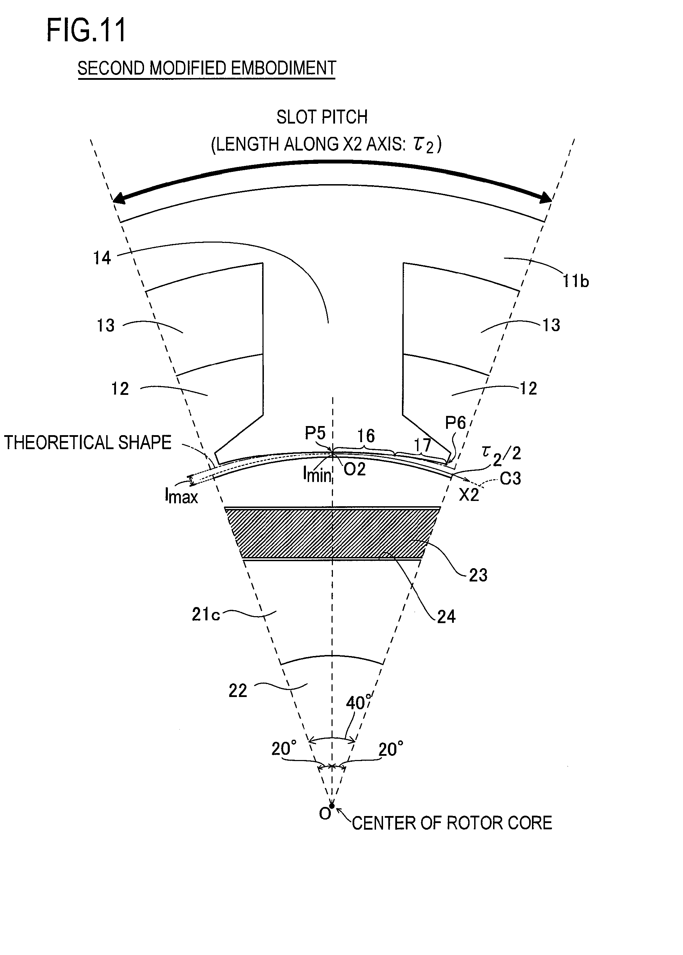

As in a second modified embodiment shown in Figs. 10 and 11, by forming a portion ranging from a center part to one end of a part of an inner circumferential part of a stator core 11b, the part being positioned between the adjacent slots 12 by two arc portions 16 and 17 (first and second arc portions) continuing to each other, a gap length between a rotor core 21c and the stator core 11b may be made the gap length along the gap length 1 regulated by the following expression (7). It should be noted that in this second modified embodiment, an outer circumferential part of the rotor core 21c is formed into a substantially perfect circle.

[Expression 6]

$$l = l(x) = \frac{2l_{max}l_{min}}{(l_{max} - l_{min})\cos\left(\dfrac{2\pi}{\tau_2}x\right) + (l_{max} + l_{min})} \qquad \square\square\square \qquad (7)$$

In the expression (7), the reference sign x denotes a distance of a part of a circumference of a circle C3 around a center O of the rotor core 21c passing between the outer circumferential part of the rotor core 21c and the inner circumferential part of the stator core 11b, the distance being measured from a center of the part corresponding to the tooth portion 14 along the circumference of the circle C3 (distance measured from a point 02 along an X2 axis in Fig. 11). The reference sign $1_{max}$ denotes a maximum value of the gap length 1 (see Fig. 11), and the reference sign $1_{min}$ denotes a minimum value of the gap length 1 (see Fig. 11). The reference sign $\tau_2$ denotes a distance in the direction along the circle C3 between the adjacent slots 12 (slot pitch (see Fig. 11)). A developing process for the above expression (7) is the same as the developing process for the above expression (2).

As shown in Fig. 11, the arc portion 16 has a part (point P5) at which the gap length between the rotor core 21c and the stator core 11b is minimum, and is formed in such a manner that the gap length becomes the gap length substantially matching with the gap length 1 regulated by the expression (7) . The arc portion 17 has a part (point P6) at which the gap length between the rotor core 21c and the stator core 11b is maximum, and is formed in such a manner that the gap length becomes the gap length substantially matching with the gap length 1 regulated by the expression (7).

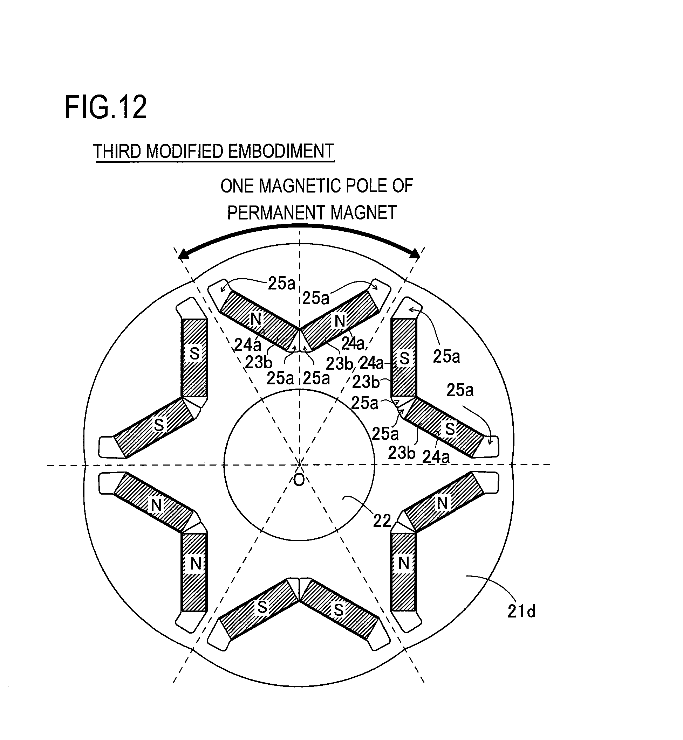

Although the above embodiment shows the example that the six permanent magnets 23 are buried in the vicinity of the outer circumferential part of the rotor core 21, and the six permanent magnets 23 are arranged in such a manner that the magnetic poles on the outer circumferential side (N pole, S pole) are alternately opposite one by one along the rotation direction, the present invention is not limited to this. As in a third modified embodiment shown in Fig. 12, twelve permanent magnets 23b may be buried in the vicinity of an outer circumferential part of a rotor core 21d, and the twelve permanent magnets 23b may be arranged in such a manner that magnetic poles on the outer circumferential side (N pole, S pole) are alternately opposite two by two along the rotation direction. In this third modified embodiment, the two adjacent permanent magnets 23b having the same magnetic pole on the outer circumferential side are arranged in a V shape. Specifically, the two adjacent permanent magnets 23b having the same magnetic pole on the outer circumferential side are arranged in such a manner that adjacent parts of the permanent magnets 23b are inclined to go toward a center 0 of the rotor core 21d. The twelve permanent magnets 23b are respectively buried (fitted) in twelve hole portions 24a formed in the vicinity of the outer circumferential part of the rotor core 21d. It should be noted that clearances 25a are provided in both ends of the permanent magnets 23b fitted in the hole portions 24a. In such a way, magnetic flux generated from the vicinity of the adjacent parts of the two adjacent permanent magnets 23b (one magnetic pole) having the same magnetic pole on the outer circumferential side toward the outer circumferential part of the rotor core 21d can be increased.

**Claims**

1. An electric motor, comprising:

a rotor core;
a stator core provided so as to face the rotor core in the radial direction; and
a permanent magnet buried in the vicinity of an outer circumferential part of the rotor core, wherein
the outer circumferential part of the rotor core and an inner circumferential part of the stator core are formed in such a manner that a radial gap length between the outer circumferential part of the rotor core and the inner circumferential part of the stator core for one magnetic pole of the permanent magnet becomes a gap length along a gap length l regulated by the following expression (1) capable of making magnetic flux density distribution between the outer circumferential part of the rotor core and the inner circumferential part of the stator core a sinusoidal waveform:

[Expression 1]

$$l = l(x) = \frac{2 l_{max} l_{min}}{(l_{max} - l_{min}) \cos\left(\dfrac{2\pi}{\tau} x\right) + (l_{max} + l_{min})} \qquad \Box\Box\Box \qquad (1)$$

wherein in the expression (1), the reference sign x denotes a distance of a part of a circumference of a circle around a center of the rotor core passing between the outer circumferential part of the rotor core and the inner circumferential part of the stator core, the distance being measured from a center of the part corresponding to one magnetic pole of the permanent magnet along the circumference of the circle, the reference sign $l_{max}$ denotes a maximum value of the gap length 1, the reference sign $1_{min}$ denotes a minimum value of the gap length 1, and the reference sign $\tau$ denotes a length of the part of the circumference of the circle around the center of the rotor core passing between the outer circumferential part of the rotor core and the inner circumferential part of the stator core, the part corresponding to one magnetic pole of the permanent magnet.

2. The electric motor according to claim 1, wherein
a portion ranging from a center part to one end of a part of at least one of the outer circumferential part of the rotor core and the inner circumferential part of the stator core, the part corresponding to one magnetic pole of the permanent magnet is formed by a plurality of arc portions continuing to each other in such a manner that the radial gap length between the outer circumferential part of the rotor core and the inner circumferential part of the stator core becomes the gap length along the gap length 1 regulated by the expression (1).

3. The electric motor according to claim 2, wherein
the portion ranging from the center part to one end of the part of at least one of the outer circumferential part of the rotor core and the inner circumferential part of the stator core, the part corresponding to one magnetic pole of the permanent magnet is formed by a first arc portion and a second arc portion continuing to each other in such a manner that the radial gap length between the outer circumferential part of the rotor core and the inner circumferential part of the stator core becomes the gap length along the gap length l regulated by the expression (1).

**4.** The electric motor according to claim 3, wherein
the portion ranging from the center part to one end of the part of the outer circumferential part of the rotor core, the part corresponding to one magnet pole of the permanent magnet is formed by the first arc portion and the second arc portion continuing to each other, and the inner circumferential part of the stator core is formed into a substantially perfect circle around the center of the rotor core in such a manner that the radial gap length between the outer circumferential part of the rotor core and the inner circumferential part of the stator core becomes the gap length along the gap length 1 regulated by the expression (1).

**5.** The electric motor according to claim 4, wherein
the first arc portion has a part at which the radial gap length between the outer circumferential part of the rotor core and the inner circumferential part of the stator core is minimum, and is formed in such a manner that a radial gap length between the first arc portion and the inner circumferential part of the stator core becomes a gap length substantially matching with the gap length l regulated by the expression (1), and
the second arc portion has a part at which the radial gap length between the outer circumferential part of the rotor core and the inner circumferential part of the stator core is maximum, and is formed in such a manner that a radial gap length between a part of the second arc portion other than the vicinity of the part at which the gap length is maximum and the inner circumferential part of the stator core becomes the gap length substantially matching with the gap length 1 regulated by the expression (1).

**6.** The electric motor according to claim 5, wherein
a center of the first arc portion and a center of the second arc portion are respectively set at positions displaced from the center of the rotor core.

**7.** The electric motor according to claim 6, wherein
a radius of the first arc portion is set to be smaller than a radius of a circle circumscribed about the rotor core.

**8.** The electric motor according to any one of claims 4 to 7, wherein
in a case where a radius of a circle around the center of the rotor core circumscribed about the rotor core is R0, and a center angle of a part of the circle around the center of the rotor core circumscribed about the rotor core, the part corresponding to one magnetic pole of the permanent magnet is $\theta p$,
a central coordinate $(x1, y1)$ of the first arc portion in a XY orthogonal coordinate system taking the center of the rotor core as an origin is set within a range regulated by $- 0.1 R0 \leq x1 \leq 0.1 R0$ and $0 \leq y1 \leq 0.7 R0$,
a central coordinate $(x2, y2)$ of the second arc portion in the XY orthogonal coordinate system is set within a range regulated by $-0.6 R0 \leq x2 \leq 0$ and $-0.6 R0 \leq y2 \leq 0.5 R0$, and
in the XY orthogonal coordinate system, an angle $\theta$ made by a Y axis and a straight line connecting the origin and a point where the first arc portion and the second arc portion are connected is set within a range regulated by $0.45 \theta p \leq \theta \leq 0.55 \theta p$.

**9.** The electric motor according to claim 1, wherein
the outer circumferential part of the rotor core and the inner circumferential part of the stator core are formed in such a manner that the radial gap length between the outer circumferential part of the rotor core and the inner circumferential part of the stator core substantially matches with the gap length l regulated by the expression (1) over the entire one magnetic pole of the permanent magnet.

**10.** The electric motor according to claim 1, wherein
a portion ranging from a center part to one end of a part of the outer circumferential part of the rotor core, the part corresponding to one magnet pole of the permanent magnet is formed by one arc portion and one straight line portion continuing to each other, and the inner circumferential part of the stator core is formed into a substantially perfect circle around the center of the rotor core in such a manner that the radial gap length between the outer circumferential part of the rotor core and the inner circumferential part of the stator core becomes the gap length along the gap length 1 regulated by the expression (1).

**11.** The electric motor according to claim 10, wherein
the one arc portion has a part at which the radial gap length between the outer circumferential part of the rotor core and the inner circumferential part of the stator core is minimum, and is formed in such a manner that a radial gap length between the one arc portion and the inner circumferential part of the stator core becomes a gap length substantially matching with the gap length l regulated by the expression (1), and
the one straight line portion has a part at which the radial gap length between the outer circumferential part of the rotor core and the inner circumferential part of the stator core is maximum, and is formed in such a manner that a radial gap length between a part of the one straight line portion other than the vicinity of the part at which the gap length is maximum and the inner circumferential part of the stator core becomes the gap length substantially matching with the gap length 1 regulated by the expression (1).

FIG.1

FIG.2

# FIG.3

ONE MAGNETIC POLE OF
PERMANENT MAGNET
(LENGTH ALONG X1 AXIS: $\tau 1$)

# FIG.4

11(1)
13
12
14

C1 O1
Imin
P1

26
21(2)
23
24

Q
27

THEORETICAL
SHAPE

$\tau$1/2
X1
Imax
P2

25

22
$\theta$
30°

O
CENTER OF ROTOR CORE

# FIG.5

**FIG.6**

ONE MAGNETIC POLE OF PERMANENT MAGNET

EP 2 463 988 A2

FIG.7

ROTOR ROTATION ANGLE
(ELECTRIC ANGLE) [deg]

# FIG.8

FIRST MODIFIED EMBODIMENT

ONE MAGNETIC POLE OF
PERMANENT MAGNET

P3 28
29
P4
N
25 23 24 25
25
30° 30° 23
60° 24
O 25
THEORETICAL
SHAPE
N
22
S 21b
S
N

# FIG.9

## FIRST MODIFIED EMBODIMENT

11(1)

13

12

14

P3

28

21b

23

24

29

25

THEORETICAL SHAPE

P4

22

$\theta$

30°

O CENTER OF ROTOR CORE

# FIG.10

SECOND MODIFIED EMBODIMENT

# FIG.11

SECOND MODIFIED EMBODIMENT

SLOT PITCH
(LENGTH ALONG X2 AXIS: $\tau_2$)

14

11b

13                    13

12                    12

P5   16   17   P6

THEORETICAL SHAPE

$I_{min}$   O2   $\tau_2/2$

C3

$I_{max}$   X2

23

21c

24

22   40°

20°   20°

O   CENTER OF ROTOR CORE

# FIG.12

### THIRD MODIFIED EMBODIMENT

ONE MAGNETIC POLE OF
PERMANENT MAGNET

**EP 2 463 988 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000197292 A